# EUROPEAN PATENT SPECIFICATION

(11) **EP 3 210 367 B1**
(45) Date of publication and mention of the grant of the patent: **22.07.2020**
(21) Application number: 14835501.9
(22) Date of filing: 16.12.2014
(51) Int. Cl.: H04L 29/14, H04L 29/08, G06F 9/455, G06F 11/20

(54) **SYSTEM AND METHOD FOR DISASTER RECOVERY OF CLOUD APPLICATIONS**
SYSTEM UND VERFAHREN ZUR NOTFALLWIEDERHERSTELLUNG VON CLOUD-ANWENDUNGEN
SYSTÈME ET PROCÉDÉ POUR RÉTABLISSEMENT APRÈS CATASTROPHE D'APPLICATIONS NUAGIQUES

(30) Priority: 23.10.2014 US 201462067513 P
(43) Date of publication of application: 30.08.2017
(73) Proprietor: Telefonaktiebolaget LM Ericsson (publ), 164 83 Stockholm (SE)
(72) Inventor: KANSO, Ali, Elmsford, NY 10523 (US)
(74) Representative: Ericsson
(86) International application number: PCT/IB2014/066983
(87) International publication number: WO 2016/063114

(56) References cited:
- US-A1- 2003 126 240
- US-A1- 2007 244 937
- US-A1- 2012 030 670
- US-A1- 2012 136 833
- US-A1- 2012 310 887

## Description

### TECHNICAL FIELD

This disclosure relates generally to systems and methods for failing-over and recovering applications across clusters in geographically-dispersed data center sites in a cloud computing environment.

### BACKGROUND

Recently, the cloud has become the lifeblood of many telecommunication network services and information technology (IT) software applications. With the development of the cloud market, cloud computing can be seen as an opportunity for information and communications technology (ICT) companies to deliver communication and IT services over any fixed or mobile network, high performance and secure end-to-end quality of service (QoS) for end users. Although cloud computing provides benefits to different players in its ecosystem and makes services available anytime, anywhere and in any context, other concerns arise regarding the performance and the quality of services offered by the cloud.

One area of concern is the High Availability (HA) of the applications hosted in the cloud. Since these applications are hosted by virtual machines (VMs) residing on physical servers, their availability depends on that of the hosting servers. When a hosting server fails, its VMs, as well as their applications become inoperative. The absence of applications protection planning can have a tremendous effect on the business continuity and IT enterprises.

One solution to these types of failures is to develop highly available systems that protect services, avoid downtime and maintain the business continuity. Since failures are bound to occur, the software applications should be deployed in a highly available manner, according to redundancy models, which can ensure that when a component and/or a hosting server associated with the application fails, another standby replica is capable of resuming the functionality of the faulty one.

Such solutions are typically designed to be deployed within a cluster of collocated servers. In other terms, a cluster is typically bounded within the data center. While this protects against local failures such as software/hardware failure, it does not protect the HA of the services against a disaster that may cause failures at the scope of the entire data center.

Therefore, it would be desirable to provide a system and method that obviate or mitigate the above described problems.

The closest prior art is US-2012/030670. This document discloses a method and system for fault tolerance in a cloud environment.

### SUMMARY

It is an object of the present invention to obviate or mitigate at least one disadvantage of the prior art.

The invention is defined in the independent claims. Additional embodiments are defined in the dependent claims.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 illustrates a Cloud network architecture;
Figure 2 illustrates example Checkpoint agent interfaces;
Figure 3a-3g illustrates a method for enabling disaster recovery for an application;
Figure 4 is a flow chart illustrating a method for monitoring a data center site;
Figure 5 is a flow chart illustrating a method for monitoring a disaster recovery manager;
Figure 6 is a flow chart illustrating a disaster recovery procedure;
Figure 7 illustrates a method for enabling inter-cluster recovery of an application;
Figure 8 illustrates a method for monitoring a cloud network for a site failure;
Figure 9 is a block diagram of a network element;
Figure 10 is a block diagram of a recovery manager; and
Figure 11 is a block diagram of a recovery manager.

### DETAILED DESCRIPTION

Reference may be made below to specific elements, numbered in accordance with the attached figures. The discussion below should be taken to be exemplary in nature, and not as limiting of the scope of the present invention. The scope of the present invention is defined in the claims, and should not be considered as limited by the implementation details described below, which as one skilled in the art will appreciate, can be modified by replacing elements with equivalent functional elements.

Embodiments of the present disclosure are directed towards maintaining the high availability (HA) of software applications providing critical services in the cloud. High availability is typically managed using clustering solutions (e.g. the Service Availability (SA) Forum middleware solution). Some embodiments will be discussed with respect to the SAForum specifications; however it will be understood by those skilled that the solutions discussed herein can be used with various middleware implementations.

Embodiments of the present disclosure allow multiple clusters in different and geographically distant data-centers to collaborate in order to enable the Disaster Recovery (DR) of the services. A system capable of monitoring and failing-over applications across geographically distant clusters will be described. Optionally, the systems and methods described herein can be used to monitor and recover applications across clusters which operate independently in the same data center location.

It is noted that the SAForum specifications do not specify any method for moving, at runtime, an application from one SAForum middleware cluster to another. As conventional clustering solutions do not support multi-clustering, thus, they also do not support the migration of an application from one cluster to another. Existing disaster recovery solutions are not based on the SAForum middleware, and hence do not consider the intricacies that exist when using the SAForum middleware in the context of disaster recovery.

Embodiments of the present disclosure define a multi-agent system capable of maintaining the service availability even in the event of a disaster. Each agent represents a software module with a specific role and functionality, that when combined with the other agents, form a complementary solution for disaster recovery.

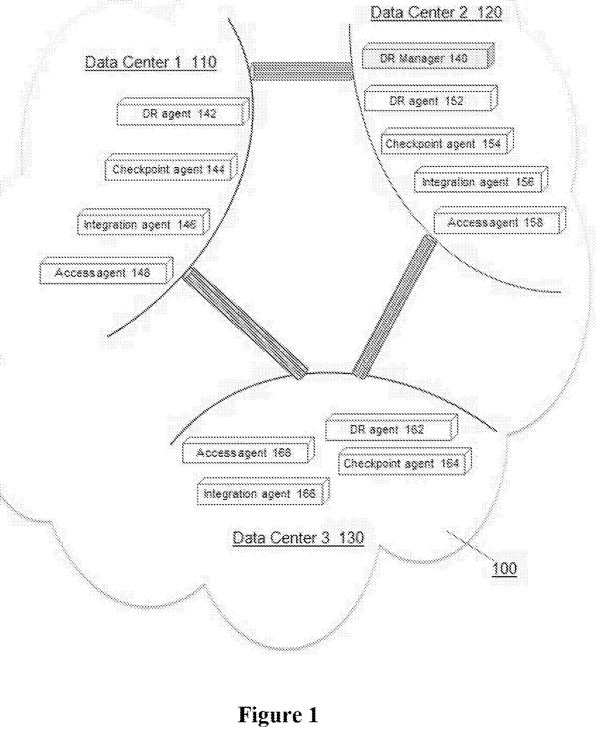

Figure 1 illustrates a Cloud network architecture. In this example embodiment, the Cloud network 100 comprises a number of data centers located at different geographic sites, Data Center 1 110, Data Center 2 120 and Data Center 3 130. A number of different agents are defined as network elements functions hosted at the various data centers. The system includes a DR Manager function 140 that is responsible for monitoring the Cloud network 100. In the case that the DR Manager 140 detects that one of the data center sites in the network 100 is completely unreachable, it can trigger a disaster recovery procedure. In such a procedure, each of the agents will have its own role and functionality to be performed in a timely manner. A Cloud Management System (not illustrated) can also be included in the network 100 as the management software which can be distributed across all data centers to have a global vision in terms of resource utilization.

The DR Manager 140 is shown as being located in Data Center 2 120, but can be hosted anywhere in the Cloud network 100. Each data center is shown as including a DR agent (142, 152, 162), a Checkpoint agent (144, 154, 164), an Integration agent (146, 156, 166) and an Access agent (148, 158, 168).

The DR Manager 140 continually probes all of the DR agents 142, 152, 162 requesting for them to report their state(s). The DR Manager 140 can trigger a disaster recovery procedure when it detects that a given site is completely isolated and cannot be reached. The DR Manager 140 is configured to select a primary and a secondary cluster for hosting any newly added DR-enabled applications. It can also select a secondary site for any existing applications on which disaster recovery is to be enabled. The DR-manager 140 essentially manages the group of DR agents 142, 152, 162 and their states.

Each data center is shown as having one DR agent 142, 152, 162. A DR agent 142 can accept requests from the DR Manager 140 to enable disaster recovery protection on a given application. It is configured to continually communicate its own state to: a) all of its other DR agents 152, 162 in the network 100; and b) the DR Manager 140. A DR agent 142 can communicate with its peer DR agents 152, 162 to receive application configuration, network configuration and other information. A DR agent 142 can communicate with the Integration agent 146 to forward an application configuration to be integrated into the cluster configuration and to extract the application configuration from the cluster configuration. The DR agent 142 can communicate with the Access agent 148 to transmit or receive the network configuration for a given application. The DR agent 142 can communicate with the Checkpoint agent 144 so that they can collaborate in checkpointing the state of an application across the multiple sites. Further, a DR agent 142 can probe its peer DR agent(s) 152, 162 for their state(s).

The Integration agent 146, 156, 166 is configured to integrate the application configuration with the cluster configuration. The configuration of a given application can be extracted from the middleware configuration in the case that it is an existing application that is already managed by the middleware. The Integration agent 146, 156, 166 can further perform administrative operations such as locking/unlocking instantiation on applications.

The Access agent 148, 158, 168 is configured to monitor and keep track of the network configuration that delivers the workload traffic to/from the application components. This information can be communicated to its local DR agent 142, 152, 162. The Access agent 148, 158, 168 can receive network configuration information from the DR agent 142, 152, 162 and communicate it to the cloud management system, which can subsequently apply this configuration through its networking module.

The Checkpoint agent 144, 154, 164 accepts checkpoint requests from an application (or the individual components of the application) and checkpoints it with the checkpointing service. Such an application is assumed to be state aware, or it is exposing the information of its checkpoints. A Checkpoint agent 144 can be configured to forward any checkpoint requests to its peer Checkpoint agent(s) 154, 164. To do so, the Checkpoint agent 144 can implement a communication interface to interact with its peer Checkpoint agent(s) 154, 164.

Those skilled in the art will readily understand that "checkpointing" is a technique for inserting fault tolerance into computing systems. It typically consists of storing a snapshot of the current application state, and at a later time, using the snapshot to restart the application (or fail-over to a backup application) in case of failure.

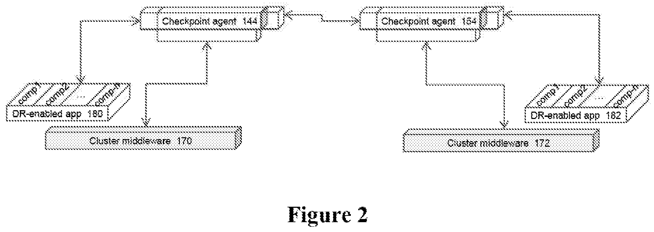

Figure 2 illustrates the example Checkpoint agent communication interfaces as introduced above. The Checkpoint agent 144, 154 can utilize two interfaces: a generic one through which it accepts requests, and a specific one compliant with the checkpointing service requirements. The Checkpoint agent 144 can respond to probing requests from the DR agent 142 and/or the DR Manager 140 asking for its state or the state of its peer(s). Checkpoint agent 144 is shown having an interface to its peer Checkpoint agent 154 (located at Data Center 2 120), an interface to the cluster middleware 170 (located at Data Center 1 110), and an interface to a DR-enabled application 180 running at Data Center 1 110. Similarly, Checkpoint agent 154 is shown having an interface to its peer Checkpoint agent 144 (located at Data Center 1 110), an interface to the cluster middleware 172 (located at Data Center 2 120), and an interface to a DR-enabled application 182 running at Data Center 2 120.

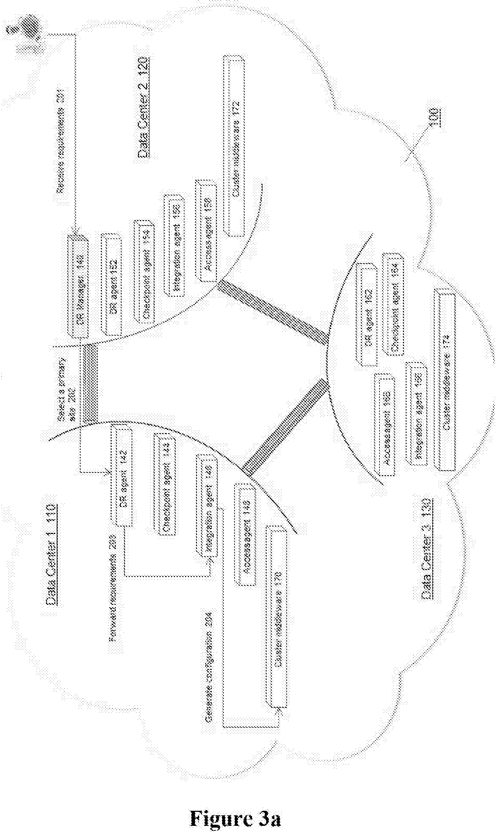

Figures 3a - 3g illustrate an example embodiment for enabling a disaster recovery procedure for an application. In some embodiments, disaster recovery procedures can include enabling an application to migrate or failover to a geographical dispersed cluster and/or data center in a network. The embodiment of Figures 3a - 3g will utilize the Cloud network 100 architecture from Figure 1 for illustrative purposes.

Beginning in Figure 3a, the application owner/administrator can request the DR Manager 140 to enable disaster recovery for the application's components (step 201). The administrator can specify at a higher level: a) the functional requirements in terms of resources needed for the application's components (e.g. CPU, memory, etc.), b) the High Availability requirements for the application (e.g. redundancy model, number of active/standby replicas) as well as the deployment information (e.g. installation scripts and dependencies), and the checkpointing information (e.g. checkpoint name), and c) the accessibility needed for the applications (e.g. the number of accessible IP addresses).

In step 202, the DR Manager 140 processes the requirements received from the application owner, and based on the resources needed for the applications and the capacity of each site, selects a primary site to host the application. This selection can optionally be done in collaboration with a Cloud Management System. The DR Manager 140 then contacts the DR agent 142 at the selected primary site, and sends the application requirements as provided by the owner.

In step 203, the DR agent 142 processes the application requirements and forwards to each of the other agents the relevant information, starting with the Integration agent 146. In step 204, the Integration agent 146 receives the High Availability and deployment information and then automatically deploys the application (this deployment can be done using the middleware 170 deployment capabilities) to generate a configuration for the application and then integrate it with the configuration of the middleware 170 that will manage the High Availability of the application.

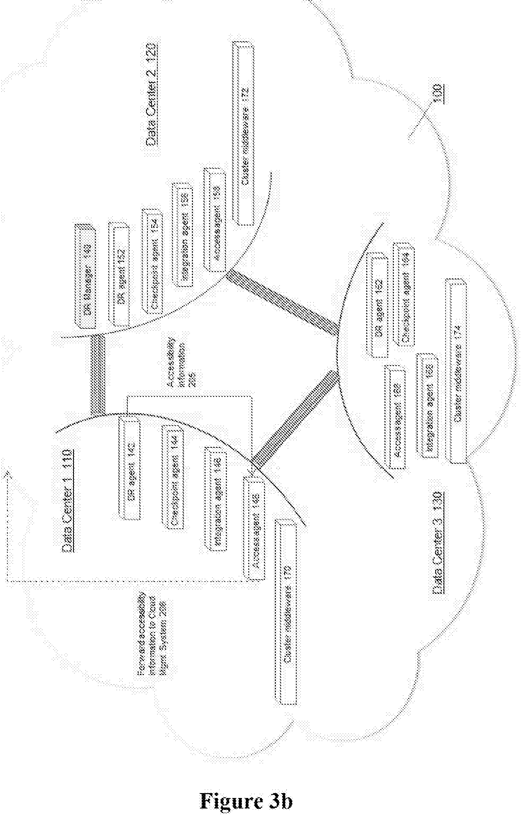

In Figure 3b, step 205 illustrates the DR agent 142 sending the accessibility information of the application to the Access agent 148. This is the information related to how to access the new application. The Access agent 148 can optionally communicate with the Cloud Management System to forward this accessibility information about the application in step 206.

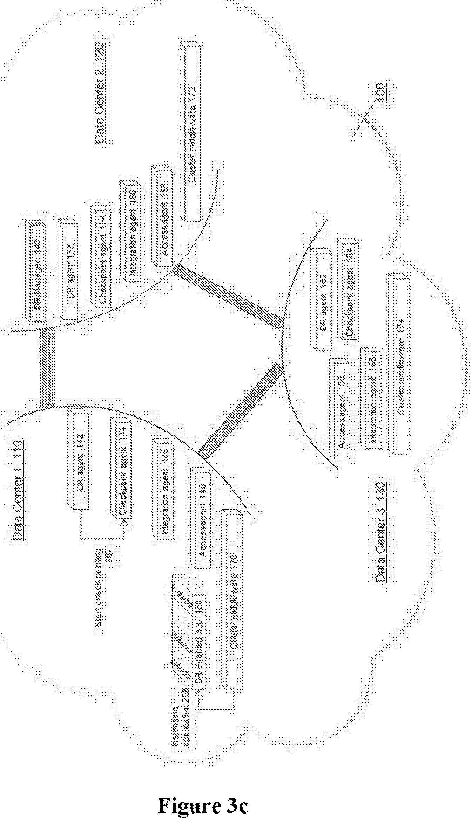

Turning to Figure 3c, in step 207, the DR agent 142 instructs the Checkpoint agent 144 to start accepting checkpoint requests from the application (if the application is state aware) or to start fetching the checkpoints created directly by the application using the middleware checkpoint service, or to get the checkpoints created by the application with other facilities such as local database. In step 208, the cluster middleware 170 can instantiate the component(s) of the new application 180 and start monitoring the application according to its high availability requirements.

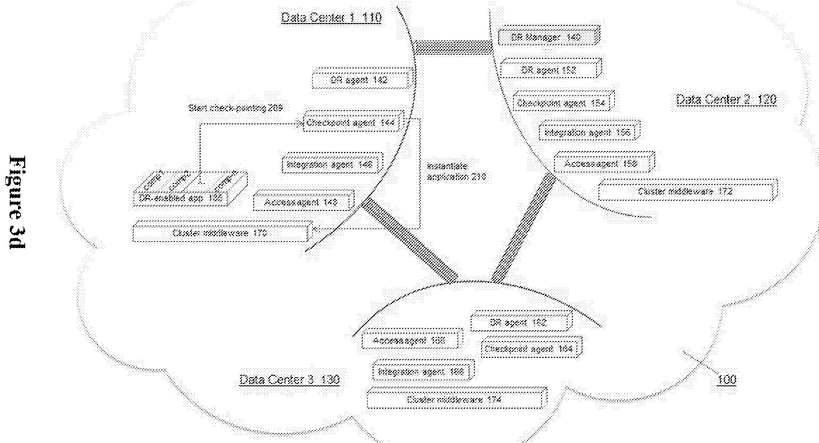

In Figure 3d, step 209 shows the state-aware application 180 checkpointing its state through the Checkpoint agent 144. The Checkpoint agent 144, in turn, checkpoints this received state with the cluster middleware 170 checkpoint services in step 210. In an alternative embodiment, if the application is SA-aware it can checkpoint its state directly with the middleware 170. It is noted that for SA-aware applications, the checkpoint agent 144 can retrieve that state directly from the middleware 170 when needed.

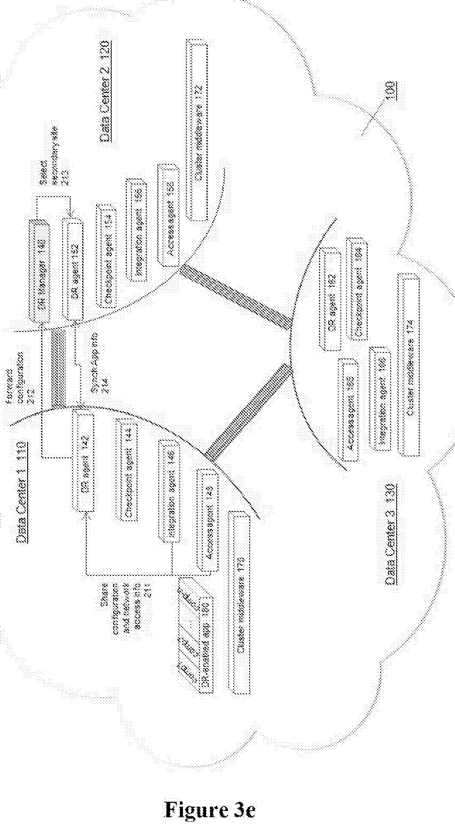

Continuing to Figure 3e, in step 211, the Access agent 148 and the Integration agent 146 share the application's generated configuration and the network access (i.e. network connectivity enforced by the cloud management system) with their DR agent 142. In step 212, the DR agent 142 notifies the DR Manager 140 that the application was successfully integrated and forwards its configuration and network access information to the DR Manager 140.

The DR Manager 140 then selects a secondary site to back-up the application (for this example Data Center 2 120), and contacts the selected secondary site's DR agent 152 to forward the application requirements as well as its generated configuration and network access information, in step 213. The DR Manager also puts the "source" DR agent 142 in contact with the "destination" DR agent 152 (e.g. the DR agents at the selected primary and secondary sites). These two peer DR agents 142/152 become siblings with respect to protecting this application from disasters. In step 214, DR agents 142 and 152 perform a hand shake, and synchronize their respective application information. The DR agents 142 and 152 can also instruct their respective Checkpoint agents 144 and 154 to get in contact with one another at this point.

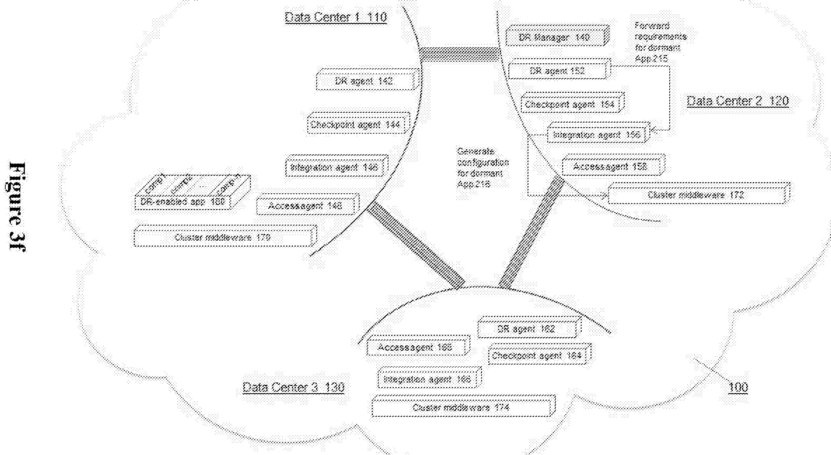

In Figure 3f, the DR agent152 (at the secondary site 120) instructs the Integration agent 156 to generate the configuration of the application and integrate it with the cluster middleware as a "dormant" application, in step 215. The Integration agent 156 can generate a configuration for the application in step 216 and maintain the application in a dormant state (i.e. installed but not instantiated, for example in a locked instantiation state) until the application needs to be made active on this secondary site 120. If the cluster at the secondary site 120 has similar settings as the cluster at the primary site 110, then the same generated configuration can be used in both sites.

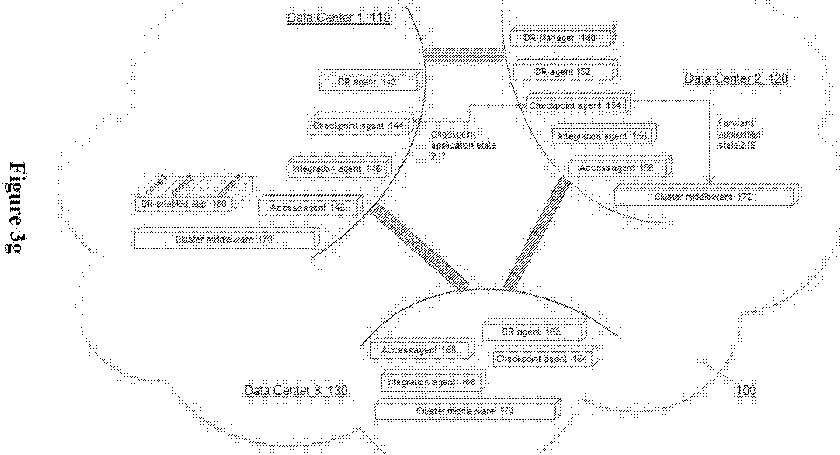

Finally, in Figure 3g step 217, the Checkpoint agent 144 at the primary site 110 starts forwarding the state of the application 180 components to the Checkpoint agent 154 at the secondary site 154. In step 218, Checkpoint agent 154 checkpoints the states using the middleware 172 checkpoint service (or any other checkpointing facility such as a database).

Each of the agents described herein can be treated as highly available from the HA middleware perspective. The agents are monitored and, in case of failure, an active agent can be failed-over to a standby replica on the same site. This is to ensure that the failure of one instance of an agent can be recovered.

Those skilled in the art will appreciate that the roles and tasks of the various agents can be combined into single functional entities in some embodiments. It is also noted that the order of the steps illustrated in Figures 3a - 3g can be modified in some embodiments.

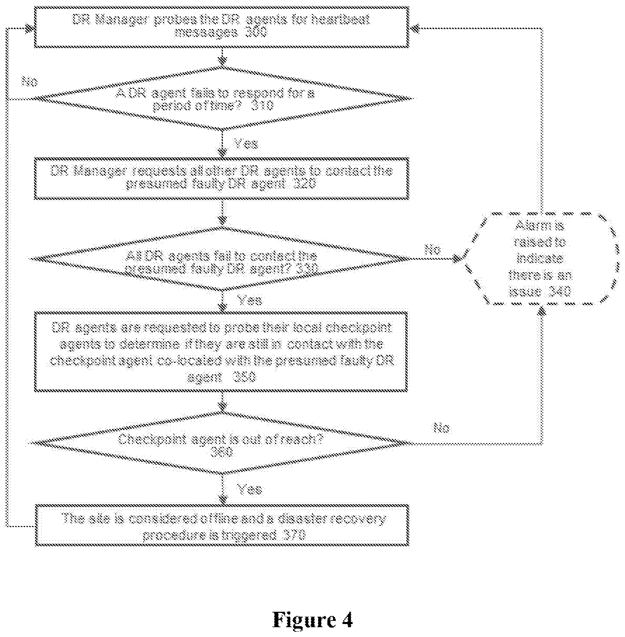

Figure 4 illustrates an exemplary process for monitoring a Cloud network and for triggering a disaster recovery procedure in case one of the sites in the network becomes unresponsive. The monitoring process is based on using multiple communication channels with multiple agents before judging that a site is down. In fact, a site is only considered "down" when it has lost contact with all of the other sites in the network, at which time the DR Manager can trigger a disaster recovery procedure and raise an alarm to the Cloud administrator.

The method of Figure 4 begins with the DR Manager probing the DR agents at each of the various sites for heartbeat messages (block 300). It is determined if any of the DR agents fails to respond within a predetermined period of time (block 310). When all of the DR agents respond within a predetermined time period, it can be assumed that all of the sites remain responsive and operational. If one of the DR agents fails to respond within the preconfigured period of time, the DR Manager will send requests to at least one other peer DR agent (at another site) to attempt to contact the unresponsive DR agent (block 320). In some embodiments, the DR Manager will ask all of the other DR agents in the system to attempt to contact the DR agent that has failed to respond.

The peer DR agent(s) will report to the DR-manager if communication is received or not received from the presumed faulty DR agent. If at least one DR agent is able to exchange messages with the presumed faulty DR agent (block 330), an alarm can be raised to indicate that there is a potential problem (but not a complete site failure) concerning the unresponsive DR agent (block 340). If none of the peer DR agents are successful in contacting the unresponsive DR agent (block 330), the DR agents are then requested to probe their respective checkpoint agents to determine if they are still successfully sending and/or receiving checkpoint requests from the checkpoint agent(s) co-located at the same site as the unresponsive DR agent (block 350).

If at least one peer checkpoint agent reports that it remains in communication with the checkpoint agent (block 360), an alarm can be raised indicate that there is a problem at the site hosting the unresponsive DR agent (block 340). If none of the checkpoint agents remain in contact with the checkpoint agent(s) at the site in question (block 360), it can be assumed that the site hosting the presumed faulty DR agent is unresponsive and is now offline. An alarm can be raised and a disaster recovery procedure is triggered responsive to determining that the site cannot be reached (block 370).

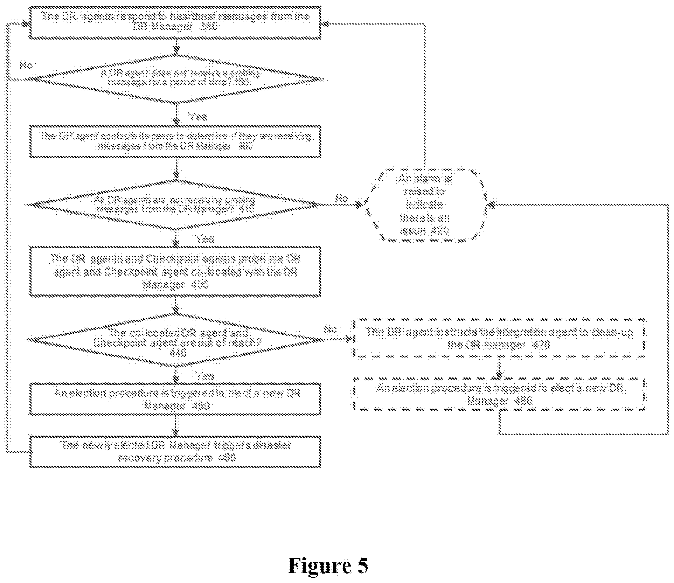

It will be appreciated that the DR Manager can be considered an important element in some embodiments of the disaster recovery systems described herein. Hence, losing the DR Manager to failure would be unacceptable. A failure of the DR Manager can be observed by the DR agents in the system. Figure 5 illustrates a process for monitoring the DR Manager. In the scenario where the DR Manager, or the DR Manager's data center site, is not accessible, a new DR Manager can be elected and the Integration agent can be instructed to "clean up" the existing traces of the old manager.

The method of Figure 5 begins with a DR agent at a given site receiving and responding to heartbeat messages from the DR Manager (block 380). If the DR agent does not receive a heartbeat message from the DR Manager for a preconfigured period of time (block 390), the DR agent will contact at least one of its peer DR-agents at another site in the network to query if they are continuing to receive messages from the DR Manager (block 400). If at least one of the peer DR agents responds to confirm that it remains in communication with the DR Manager (block 410), an alarm can be raised to indicate that there is a problem, but not a disaster, affecting the DR Manager (block 420).

If none of the peer DR agents are able to contact the DR Manger (block 410), the DR agents can be instructed to attempt to contact a DR agent co-located at the same site as the DR Manager (block 430). Similarly, the checkpoint agents that the various sites can be instructed to attempt to contact a checkpoint agent co-located at the same site as the DR Manager. If at least one of a DR agent or a checkpoint agent co-located with the DR Manager responds to the contact (block 440), the DR agent can instruct the Integration agent to delete/clean up the current DR Manager and remove it from the configuration of the cluster (block 470). An election procedure can then be triggered to have the DR agents select a new DR Manager to be launched on the same site or a different site (block 480).

In the case where none of the DR agent(s) or checkpoint agent(s) co-located with the unresponsive DR Manager respond to the queries (block 440), an election procedure is triggered to elect and launch a new DR Manager on a site other than the site hosting the current unresponsive DR Manager (block 450). The newly launched DR Manager can then trigger a disaster recovery procedure for the failed site (block 460).

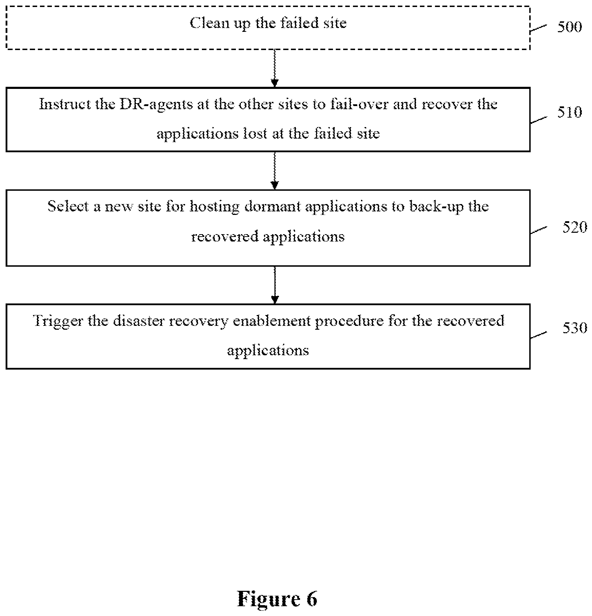

Figure 6 illustrates a disaster recovery procedure that can be triggered by a DR Manager when a disaster is deemed to have occurred.

In the optional scenario of an administratively triggered procedure, the DR Manager can first attempt to "clean up" the failed site by asking the clustering solution to delete/remove all of the running applications (block 500). The DR Manager will next instruct the sibling DR agents (e.g. DR agents at other sites) to each perform their role in recovering the applications lost in the faulty site (block 510). Each sibling DR agent will instruct its local Integration agent to instantiate the components of the dormant application (i.e. a corresponding dormant application to an active application deployed in the faulty site). Each DR agent will instruct its Access agent to grant the accessibility needed for the previously dormant application.

The DR Manager will then select a new site to serve as the secondary/back-up site to host the dormant applications (block 520). The set-up procedure similar to as described in Figures 3a-3g can then be repeated to enable disaster recovery for the recovered applications (block 530).

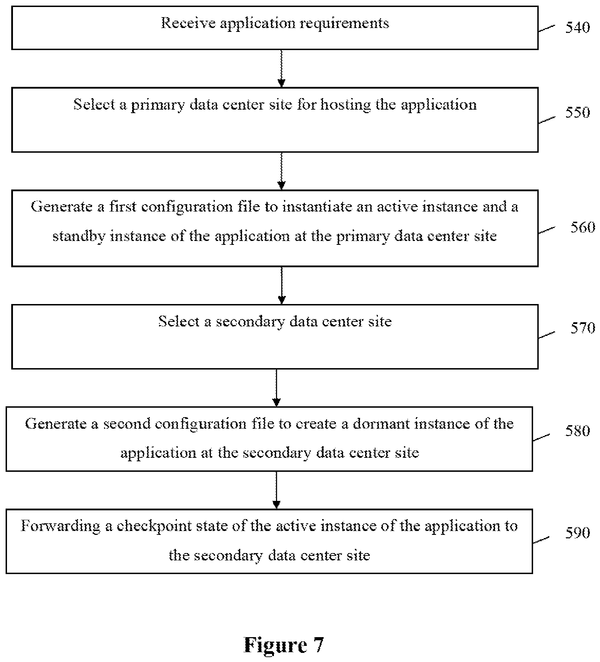

Figure 7 is a flow chart illustrating a method for enabling an inter-cluster recovery of an application. The method can be implemented by a recovery manager entity. The recovery manager can be located at a data center in a cloud network comprising a plurality of geographically-dispersed data center sites. The terminology "inter-cluster" will be understood to refer to a recovery, or failover, of an application located at one cluster/site in the network to another cluster/site in the network.

The method begins by receiving requirements associated with an application to be enabled for inter-cluster recovery (block 540). The application requirements can include parameters associated with the application such as a redundancy model for the application, any inter-dependencies and/or delay tolerances between components, network access requirements for the components (e.g. network address and bandwidth), CPU, memory, storage, etc. A primary data center site is selected from the plurality of sites in the network for hosting the application (block 550). The primary data center site can be selected to host an active instance of the application and a standby instance of the application. In some embodiments, a number of active instances and/or standby instances of the application can be determined in accordance with a redundancy model or high availability requirement associated with the application. The redundancy model can be specified in the received application requirements. In some embodiments, the primary data center is selected to host all of the active and standby instances of the application as required.

A first configuration file is generated to instantiate an active instance and a standby instance of the application at the primary data center site (block 560). In some embodiments, the first configuration file is transmitted to a first cluster middleware located at the primary data center site. In some embodiments, the configuration file can be generated by an integration agent at the primary data center. The first cluster middleware is configured to instantiate the active and standby instances of the application at the primary data center in accordance with the configuration file.

A secondary data center site is selected from the plurality of sites in the network (block 570). The secondary data center is selected to host a dormant instance of the application. A second configuration file is generated to create a dormant instance of the application at the secondary data center site (block 580). In some embodiments, the configuration file can be generated by an integration agent at the secondary data center. In some embodiments, the second configuration file is transmitted to a second cluster middleware located at the second data center site. The second cluster middleware can be instructed to create a dormant instance of the application without actually instantiating, or launching, the instance. The dormant instance can be maintained in a "ready to launch" state.

A checkpoint state of the active instance of the application is forwarded to the secondary data center site (block 590). In some embodiments, the state of the application can be received from the first cluster middleware. The state of the application can be forwarded to the second cluster middleware. The state can be forwarded in order to synchronize the state of the dormant instance of the application (at the secondary site) with the state of the active instance of the application (at the secondary site). Thus, if/when the dormant instance is instantiated, it can instantiated with the current state of the application.

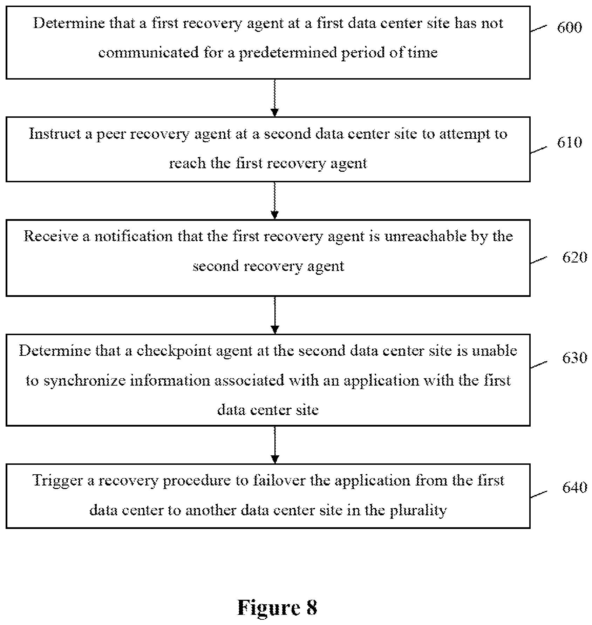

Figure 8 is a flow chart illustrating a method for monitoring a cloud network comprising a plurality of data center sites for a site failure. The method of Figure 8 can be implemented by a recovery manager entity. The recovery manager can be located at one of the data centers in the network. Optionally, the recovery manager can be included as part of a cloud management system.

The method begins by determining that a first recovery agent located at a first data center site has not communicated for a predetermined period of time (block 600). In some embodiments, the recovery agent can send period communications to the recovery manager to indicate its state and/or health. In some embodiments, the recovery manager can send heartbeat messages to the recovery agent, to which the recovery agent is expected to acknowledge within the predetermined time period. If the recovery agent fails to respond to a heartbeat message, it can be determined to be out of contact with the recovery manager. In some embodiments, the recovery agent can send period communications to its peer recovery agents located at other sites.

Responsive to determining that the first recovery agent is out of contact, a peer recovery agent located at a second data center site is instructed to attempt to contact the first recovery agent (block 610). In some embodiments, multiple peer recovery agents are requested to attempt to reach the first recovery agent. The multiple peer recovery agents can be each located at a different data center site in the network.

A notification is received that the second recovery agent was unable to reach the first recovery agent (block 620). In some embodiments, as long as one of the peer agents is able to communicate with the first recovery agent, it is determined that there is a problem with the first recovery agent but not a full disaster at the first data center site.

A peer checkpoint agent at the second data center (or another data center in the network) can be instructed to attempt to communicate with a first checkpoint agent located at the first data center site. It is determined that the peer checkpoint agent is unable to synchronize data and/or information associated with an application with the first data center site (block 630). In some embodiments, the checkpoint agent is configured to synchronize a state of the application with at least one peer checkpoint agent at another center site. The information associated with the application can be a checkpoint state of an active instance of the application.

Responsive to the determination of block 630, it is determined that the first data center site is unresponsive. A recovery procedure is triggered to failover the application from the first data center site to another data center site in the plurality (block 650). The application can be failed-over to the second data center site or a different data center site selected from the plurality.

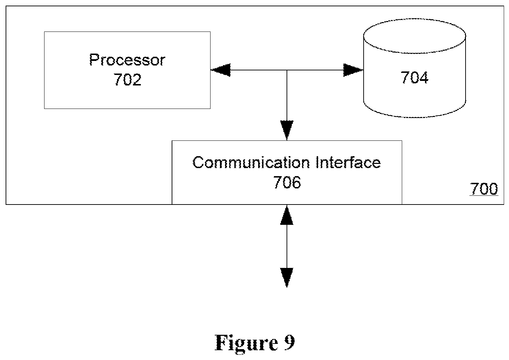

Figure 9 is a block diagram illustrating an example network element 700 according to embodiments of the present invention. Network element 700 can be any one or more of the agent functions, such as the DR agent or the recovery agent, as described herein. In other embodiments, network element 700 can be a management function, such as the DR Manager or recovery manager, as described herein. In other embodiments, network element 700 can be a cloud manager configured to perform the functions of any or all of the various agent and manager entities as described herein.

The network element 700 includes a processor 702, a memory or instruction repository 704 and a communication interface 706. The communication interface 706 can include at least one input port and at least one output port. The memory 704 contains instructions executable by the processor 702 whereby the network element 700 is operable to perform the various embodiments as described herein. In some embodiments, the network element 700 can be a virtualized application hosted by the underlying physical hardware. In some embodiments, the network element 700 can comprise a plurality of modules including, but not limited to, a disaster recovery manager module, a disaster recovery agent module, an integration agent module, an access agent module, and/or a checkpoint agent module.

Network element 700 can optionally be configured to perform the embodiments described herein with respect to Figure 7 to enable an inter-cluster recovery of an application.

Network element 700 can optionally be configured to perform the embodiments described herein with respect to Figure 8 to monitor a cloud network comprising a plurality of data center sites for a site failure.

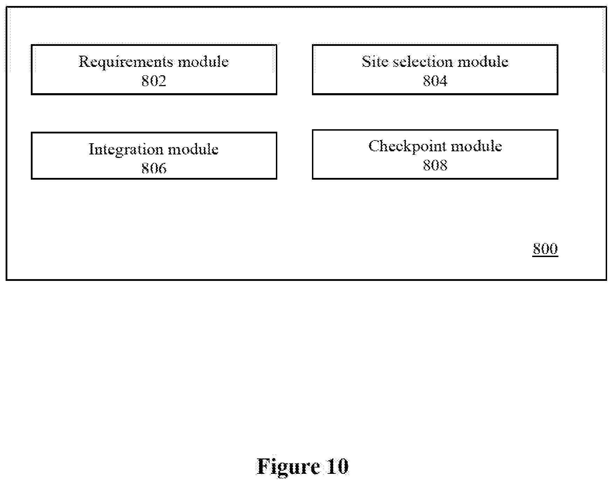

Figure 10 is a block diagram of a recovery manager entity 800 that can include a number of modules. Recovery manager 800 can include a requirements module 802, a site selection module 804, an integration module 806 and a checkpoint module 808. Requirements module 802 can be configured for receiving requirements associated with an application. Site selection module 804 can be configured for selecting a primary data center site for hosting the application and for selecting a secondary data center site. Integration module 806 can be configured for generating a first configuration file in accordance with the requirements and transmitting the first configuration file to a first cluster middleware at the primary data center site to instantiate an active instance and a standby instance of the application, and for generating a second configuration file in accordance with the requirements and transmitting the second configuration to a second cluster middleware at the secondary data center site to create a dormant instance of the application. Checkpoint module 808 can be configured for forwarding a state associated with the active instance of the application from the first data center site to the secondary data center.

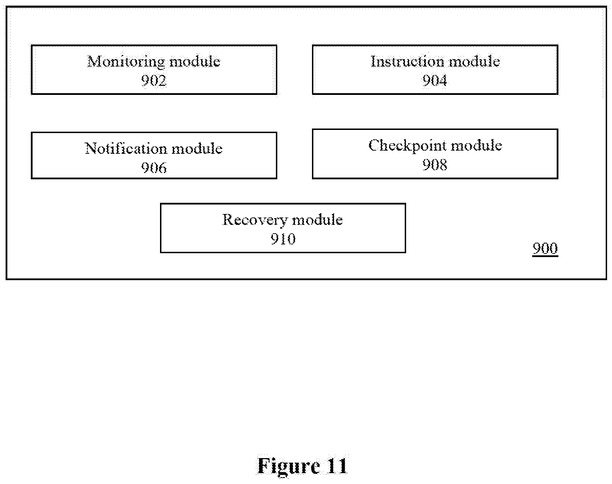

Figure 11 is another block diagram of a recovery manager entity 900 that can include a number of modules. Recovery manager 900 can include a monitoring module 902, an instruction module 904, a notification module 906, a checkpoint module 908 and a recovery module 910. Monitoring module 902 can be configured for monitoring a cloud network comprising a plurality of data center sites for a site failure, and for determining that the first recovery agent at a first data center has not communicated for a predetermined period of time. Instruction module 904 can be configured for instructing a peer recovery agent at a second data center site to attempt to reach the first recovery agent. Notification module 906 can be configured for receiving a notification that the first recovery agent is unreachable by the second recovery agent. Checkpoint module 908 can be configured for determining that a checkpoint agent at the second data center site is unable to synchronize data associated with an application with the first data center site. Recovery module 910 can be configured for triggering a recovery procedure to failover the application from the first data center to another data center site in the plurality.

The unexpected outage of cloud services has a great impact on business continuity and IT enterprises. Embodiments of the present disclosure allow the services provided in the Cloud to be resilient to disasters and data-center failures. The complexity of achieving disaster recovery can be abstracted from the system administrators, thus making the disaster recovery management of the Cloud network easier to accomplish.

Embodiments of the invention may be represented as a software product stored in a machine-readable medium (also referred to as a computer-readable medium, a processor-readable medium, or a computer usable medium having a computer readable program code embodied therein). The non-transitory machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method for monitoring a cloud network comprising a plurality of data center sites for a site failure, comprising:
responsive to determining that a first recovery agent at a first data center site has not communicated for a predetermined period of time, instructing a peer recovery agent at a second data center site to attempt to reach the first recovery agent;
receiving a notification that the first recovery agent is unreachable by the second recovery agent; and
responsive to determining that a checkpoint agent at the second data center site is unable to synchronize information associated with an application with the first data center site, triggering a recovery procedure to failover the application from the first data center site to another data center site in the plurality.

2. The method of claim 1, wherein the first recovery agent is configured to periodically communicate its state to a recovery manager.

3. The method of claim 1, wherein the first recovery agent is configured to periodically communicate its state to the peer recovery agent.

4. The method of claim 1, wherein determining that the first recovery agent at the first data center site has not communicated for the predetermined period of time includes determining that the first recovery agent has failed to respond to a heartbeat message.

5. The method of claim 1, further comprising instructing peer recovery agents at each of the data center sites in the plurality to attempt to reach the first recovery agent.

6. The method of claim 1, wherein the checkpoint agent is configured to synchronize a state of the application with a peer checkpoint agent at the first data center site.

7. The method of claim 1, wherein the information associated with the application is a checkpoint state of an active instance of the application.

8. A recovery manager for monitoring a cloud network comprising a plurality of data center sites for a site failure, comprising a processor and a memory, the memory containing instructions executable by the processor whereby the recovery manager is operative to:
instruct a peer recovery agent at a second data center site to attempt to reach a first recovery agent at a first data center site in response to determining that the first recovery agent has not communicated for a predetermined period of time;
receive a notification that the first recovery agent is unreachable by the second recovery agent; and
trigger a recovery procedure to failover an application from the first data center to another data center site in the plurality in response to determining that a checkpoint agent at the second data center site is unable to synchronize information associated with the application with the first data center site.

9. The recovery manager of claim 8, wherein the first recovery agent is configured to periodically communicate its state to a recovery manager.

10. The recovery manager of claim 8, wherein the first recovery agent is configured to periodically communicate its state to the peer recovery agent.

11. The recovery manager of claim 8, wherein determining that the first recovery agent at the first data center site has not communicated for the predetermined period of time includes determining that the first recovery agent has failed to respond to a heartbeat message.

12. The recovery manager of claim 8, further comprising instructing peer recovery agents at each of the data center sites in the plurality to attempt to reach the first recovery agent.

13. The recovery manager of claim 8, wherein the checkpoint agent is configured to synchronize a state of the application with a peer checkpoint agent at the first data center site.

14. The recovery manager of claim 8, wherein the information associated with the application is a checkpoint state of an active instance of the application.

15. A recovery manager comprising:
a monitoring module for monitoring a cloud network comprising a plurality of data center sites for a site failure, and for determining that the first recovery agent at a first data center has not communicated for a predetermined period of time;
an instruction module for instructing a peer recovery agent at a second data center site to attempt to reach the first recovery agent;
a notification module for receiving a notification that the first recovery agent is unreachable by the second recovery agent;
a checkpoint module for determining that a checkpoint agent at the second data center site is unable to synchronize information associated with an application with the first data center site; and
a recovery module for triggering a recovery procedure to failover the application from the first data center to another data center site in the plurality.

## Patentansprüche

1. Verfahren zur Überwachung eines Cloud-Netzwerks, das eine Mehrzahl von Rechenzentrumsstandorten umfasst, auf einen Standortausfall, umfassend:
Anweisen in Reaktion auf ein Bestimmen, dass ein erster Wiederherstellungsagent an einem ersten Rechenzentrumsstandort für eine vorbestimmte Zeitdauer nicht kommuniziert hat, eines Partner-Wiederherstellungsagenten an einem zweiten Rechenzentrumsstandort, zu versuchen, den ersten Wiederherstellungsagenten zu erreichen;
Empfangen einer Benachrichtigung, dass der erste Wiederherstellungsagent unerreichbar ist, durch den zweiten Wiederherstellungsagenten; und
Auslösen in Reaktion auf ein Bestimmen, dass ein Kontrollpunktagent am zweiten Rechenzentrumsstandort nicht in der Lage ist, Informationen, die mit einer Anwendung assoziiert sind, mit dem ersten Rechenzentrumsstandort zu synchronisieren, einer Wiederherstellungsprozedur für ein Failover der Anwendung vom ersten Rechenzentrumsstandort zu einem anderen Rechenzentrumsstandort der Mehrzahl.

2. Verfahren nach Anspruch 1, wobei der erste Wiederherstellungsagent zum periodischen Kommunizieren seines Zustands an einen Wiederherstellungsverwalter konfiguriert ist.

3. Verfahren nach Anspruch 1, wobei der erste Wiederherstellungsagent zum periodischen Kommunizieren seines Zustands an einen Partner-Wiederherstellungsagenten konfiguriert ist.

4. Verfahren nach Anspruch 1, wobei das Bestimmen, dass der erste Wiederherstellungsagent am ersten Rechenzentrumsstandort für die vorbestimmte Zeitdauer nicht kommuniziert hat, ein Bestimmen umfasst, dass der erste Wiederherstellungsagenten auf eine Heartbeat-Nachricht nicht geantwortet hat.

5. Verfahren nach Anspruch 1, ferner umfassend ein Anweisen von Partner-Wiederherstellungsagenten an jedem der Rechenzentrumsstandorte in der Mehrzahl, zu versuchen, den ersten Wiederherstellungsagenten zu erreichen.

6. Verfahren nach Anspruch 1, wobei der Kontrollpunktagent zum Synchronisieren eines Zustands der Anwendung mit einem Partner-Kontrollpunktagenten am ersten Rechenzentrumsstandort konfiguriert ist.

7. Verfahren nach Anspruch 1, wobei es sich bei den mit der Anwendung assoziierten Informationen um einen Kontrollpunktzustand einer aktiven Instanz der Anwendung handelt.

8. Wiederherstellungsverwalter zum Überwachen eines Cloud-Netzwerks, das eine Mehrzahl von Datenzentrumsstandorten umfasst, auf einen Standortausfall, umfassend einen Prozessor und einen Speicher, wobei der Speicher Anweisungen enthält, die vom Prozessor ausgeführt werden können, wodurch der Wiederherstellungsverwalter ausgelegt ist zum:
Anweisen eines Partner-Wiederherstellungsagenten an einem zweiten Rechenzentrumsstandort, zu versuchen, einen ersten Wiederherstellungsagenten an einem ersten Datenzentrumsstandort zu erreichen, in Reaktion auf ein Bestimmen, dass der erste Wiederherstellungsagent für eine vorbestimmte Zeitdauer nicht kommuniziert hat,
Empfangen einer Benachrichtigung, dass der erste Wiederherstellungsagent unerreichbar ist, durch den zweiten Wiederherstellungsagenten; und
Auslösen einer Wiederherstellungsprozedur für ein Failover der Anwendung vom ersten Rechenzentrumsstandort zu einem anderen Rechenzentrumsstandort der Mehrzahl in Reaktion auf ein Bestimmen, dass ein Kontrollpunktagent am zweiten Rechenzentrumsstandort nicht in der Lage ist, Informationen, die mit einer Anwendung assoziiert sind, mit dem ersten Rechenzentrumsstandort zu synchronisieren.

9. Wiederherstellungsverwalter nach Anspruch 8, wobei der erste Wiederherstellungsagent zum periodischen Kommunizieren seines Zustands an einen Wiederherstellungsverwalter konfiguriert ist.

10. Wiederherstellungsverwalter nach Anspruch 8, wobei der erste Wiederherstellungsagent zum periodischen Kommunizieren seines Zustands an einen Partner-Wiederherstellungsagenten konfiguriert ist.

11. Wiederherstellungsverwalter nach Anspruch 8, wobei das Bestimmen, dass der erste Wiederherstellungsagent am ersten Rechenzentrumsstandort für die vorbestimmte Zeitdauer nicht kommuniziert hat, ein Bestimmen umfasst, dass der erste Wiederherstellungsagenten auf eine Heartbeat-Nachricht nicht geantwortet hat.

12. Wiederherstellungsverwalter nach Anspruch 8, ferner umfassend ein Anweisen von Partner-Wiederherstellungsagenten an jedem der Rechenzentrumsstandorte der Mehrzahl, zu versuchen, den ersten Wiederherstellungsagenten zu erreichen.

13. Wiederherstellungsverwalter nach Anspruch 8, wobei der Kontrollpunktagent zum Synchronisieren eines Zustands der Anwendung mit einem Partner-Kontrollpunktagenten am ersten Rechenzentrumsstandort konfiguriert ist.

14. Wiederherstellungsverwalter nach Anspruch 8, wobei es sich bei den mit der Anwendung assoziierten Informationen um einen Kontrollpunktzustand einer aktiven Instanz der Anwendung handelt.

15. Wiederherstellungsverwalter, umfassend:
ein Überwachungsmodul zum Überwachen eines Cloud-Netzwerks, das eine Mehrzahl von Rechenzentrumsstandorten umfasst, auf einen Standortausfall und zum Bestimmen, dass der erste Wiederherstellungsagent an einem ersten Rechenzentrumsstandort für eine vorbestimmte Zeitdauer nicht kommuniziert hat;
ein Anweisungsmodul zum Anweisen eines Partner-Wiederherstellungsagenten an einem zweiten Rechenzentrumsstandort, zu versuchen, den ersten Wiederherstellungsagenten zu erreichen;
ein Benachrichtigungsmodul zum Empfangen einer Benachrichtigung, dass der erste Wiederherstellungsagent unerreichbar ist, durch den zweiten Wiederherstellungsagenten;
ein Kontrollpunktmodul zum Bestimmen, dass ein Kontrollpunktagent am zweiten Rechenzentrumstandort nicht in der Lage ist, Informationen, die mit der Anwendung assoziiert sind, mit dem ersten Rechenzentrumsstandort zu synchronisieren; und
ein Wiederherstellungsmodul zum Auslösen einer Wiederherstellungsprozedur für ein Failover vom ersten Rechenzentrumstandort zu einem anderen Rechenzentrumstandort der Mehrzahl.

## Revendications

1. Procédé de surveillance d'un réseau de cloud comprenant une pluralité de sites de centre de données pour une défaillance de site, comprenant :
en réponse à la détermination qu'un premier agent de rétablissement à un premier site de centre de données n'a pas communiqué pendant une période de temps prédéterminée, l'instruction à un agent de rétablissement pair à un deuxième site de centre de données d'essayer de joindre le premier agent de rétablissement ;
la réception d'une notification que le premier agent de rétablissement est injoignable par le deuxième agent de rétablissement ; et
en réponse à la détermination qu'un agent de point de contrôle au deuxième site de centre de données est incapable de synchroniser des informations associées à une application avec le premier site de centre de données, le déclenchement d'une procédure de rétablissement pour le basculement de l'application du premier site de centre de données à un autre site de centre de données dans la pluralité.

2. Procédé selon la revendication 1, dans lequel le premier agent de rétablissement est configuré pour communiquer périodiquement son état à un gestionnaire de rétablissement

3. Procédé selon la revendication 1, dans lequel le premier agent de rétablissement est configuré pour communiquer périodiquement son état à l'agent de rétablissement pair.

4. Procédé selon la revendication 1, dans lequel la détermination que le premier agent de rétablissement au premier site de centre de données n'a pas communiqué pendant la période de temps prédéterminée inclut la détermination que le premier agent de rétablissement n'est pas parvenu à répondre à un message de pouls.

5. Procédé selon la revendication 1, comprenant en outre l'instruction à des agents de rétablissement pairs à chacun des sites de centre de données dans la pluralité d'essayer de joindre le premier agent de rétablissement.

6. Procédé selon la revendication 1, dans lequel l'agent de point de contrôle est configuré pour synchroniser un état de l'application avec un agent de point de contrôle pair au premier site de centre de données.

7. Procédé selon la revendication 1, dans lequel les informations associées à l'application sont un état de point de contrôle d'une instance active de l'application.

8. Gestionnaire de rétablissement permettant de surveiller un réseau de cloud comprenant une pluralité de sites de centre de données pour une défaillance de site, comprenant un processeur et une mémoire, la mémoire contenant des instructions exécutables par le processeur de telle manière que le gestionnaire de rétablissement soit opérationnel pour effectuer :
l'instruction à un agent de rétablissement pair à un deuxième site de centre de données d'essayer de joindre un premier agent de rétablissement à un premier site de centre de données en réponse à la détermination que le premier agent de rétablissement n'a pas communiqué pendant une période de temps prédéterminée ;
la réception d'une notification que le premier agent de rétablissement est injoignable par le deuxième agent de rétablissement ; et
le déclenchement d'une procédure de rétablissement pour le basculement d'une application du premier site de centre de données à un autre site de centre de données dans la pluralité en réponse à la détermination qu'un agent de point de contrôle au deuxième site de centre de données est incapable de synchroniser des informations associées à l'application avec le premier site de centre de données.

9. Gestionnaire de rétablissement selon la revendication 8, dans lequel le premier agent de rétablissement est configuré pour communiquer périodiquement son état à un gestionnaire de rétablissement.

10. Gestionnaire de rétablissement selon la revendication 8, dans lequel le premier agent de rétablissement est configuré pour communiquer périodiquement son état à l'agent de rétablissement pair.

11. Gestionnaire de rétablissement selon la revendication 8, dans lequel la détermination que le premier agent de rétablissement au premier site de centre de données n'a pas communiqué pendant la période de temps prédéterminée inclut la détermination que le premier agent de rétablissement n'est pas parvenu à répondre à un message de pouls.

12. Gestionnaire de rétablissement selon la revendication 8, comprenant en outre l'instruction à des agents de rétablissement pairs à chacun des sites de centre de données dans la pluralité d'essayer de joindre le premier agent de rétablissement.

13. Gestionnaire de rétablissement selon la revendication 8, dans lequel l'agent de point de contrôle est configuré pour synchroniser un état de l'application avec un agent de point de contrôle pair au premier site de centre de données.

14. Gestionnaire de rétablissement selon la revendication 8, dans lequel les informations associées à l'application sont un état de point de contrôle d'une instance active de l'application.

15. Gestionnaire de rétablissement comprenant :
un module de surveillance pour surveiller un réseau de cloud comprenant une pluralité de sites de centre de données pour une défaillance de site, et pour déterminer que le premier agent de rétablissement à un premier site de centre de données n'a pas communiqué pendant une période de temps prédéterminée ;
un module d'instruction pour instruire à un agent de rétablissement pair à un deuxième site de centre de données d'essayer de joindre le premier agent de rétablissement ;
un module de notification pour recevoir une notification que le premier agent de rétablissement est injoignable par le deuxième agent de rétablissement ;
un module de point de contrôle pour déterminer qu'un agent de point de contrôle au deuxième site de centre de données est incapable de synchroniser des informations associées à une application avec le premier site de centre de données ; et
un module de rétablissement pour déclencher une procédure de rétablissement pour le basculement de l'application du premier site de centre de données à un autre site de centre de données dans la pluralité.
